# EUROPEAN PATENT SPECIFICATION

(11) **EP 3 422 468 B1**
(45) Date of publication and mention of the grant of the patent: **06.12.2023**
(21) Application number: 18178811.8
(22) Date of filing: 20.06.2018
(51) Int. Cl.: H01Q 1/12, H01Q 9/30, H01Q 21/30, H01Q 5/385

(54) **GLASS ANTENNA AND VEHICLE WINDOW GLASS**
GLASANTENNE UND FAHRZEUGFENSTERGLAS
ANTENNE DE VITRE ET VITRE DE VÉHICULE

(30) Priority: 27.06.2017 JP 2017124820
(43) Date of publication of application: 02.01.2019
(73) Proprietor: AGC Inc., Tokyo 100-8405 (JP)
(72) Inventor: YAMAMOTO, Tsuyoshi, Tokyo, 100-8405 (JP); KOMATSU, Youhei, Tokyo, 100-8405 (JP)
(74) Representative: Müller-Boré & Partner Patentanwälte PartG mbB

(56) References cited:
- EP-A1- 2 797 164
- GB-A- 2 481 926
- JP-A- 2013 131 889
- US-A1- 2011 037 668
- US-A1- 2015 349 411
- US-A1- 2016 359 219

## Description

### BACKGROUND OF THE INVENTION

### 1. Field of the Invention

The disclosure herein generally relates to a glass antenna and a vehicle window glass.

### 2. Description of the Related Art

Conventionally, glass antennas arranged on glass plates for vehicle windows have been known (e.g. see Patent document 1). Patent document 1 discloses, in Figures 1 to 3, a glass antenna of a monopole type provided with a feeding portion, and a glass antenna of a dipole type provided with two feeding portions.

### [Citation List]

### [Patent Literature]

[PTL 1] Japanese Unexamined Patent Application Publication No. 2006-197184

US 2016/359219 describes a glass antenna for a vehicle including a feeding point; and a first antenna element extending from the feeding point approximately in a horizontal direction, wherein, if a wavelength at a center frequency of a received frequency band in air is λ, a glass wavelength shortening coefficient is k, and a wavelength on the rear window glass is Ag=X-k, a conductor length of the first antenna element is less than or equal to (1/6) ·λg, and wherein a distance between the first antenna element and a first heater line that is disposed at an outer-most position and that is closest to the first antenna element among a plurality of heater lines is less than or equal to (1/40)·λg.

GB 2 481 926 A describes an antenna device for a vehicle window provided with a ground pattern, a power supply terminal and an antenna element. The ground pattern has a ground terminal and a loop-shaped section and is arranged practically parallel with the edge of the vehicle body. The power supply terminal is arranged close to the ground pattern. The antenna element extends from the power supply terminal in the vertical direction with respect to the ground pattern. A plurality of bridge patterns that are parallel with the antenna element are provided on the inside of the loop-shaped ground pattern.

US 2015/349411 describes a window glass for vehicle including a glass plate, and a conductive film provided on the glass plate, and a linear conductor antenna provided within a region between a glass edge at an outer edge of the glass plate and a film edge at an outer edge or the conductive film. The conductive film includes a slot having an open end that opens at an opposing outer edge part of the conductive film, opposing the linear conductor antenna.

EP 2 797 164 A1 describes a glass antenna disposed at an upper section of a defogger of a rear window glass of an automotive vehicle, an FM first antenna, an FM second antenna, and a DAB purpose antenna. The FM first antenna is disposed such that a blank space formed by an FM first antenna element and a flange end edge of the vehicle is disposed at an upper part of the defogger, the FM second antenna and the DAB purpose antenna are disposed on the blank space, the FM second antenna includes: an FM second antenna feed point disposed at a side section of the rear window glass; and an FM second antenna element including: an FM second antenna first strip; and an FM second antenna second strip, and FM second antenna first strip has one end connected to the FM second antenna feed point, is extended in a direction away from the FM second antenna feed point, and has the other end connected to a tip or to a midway section through the FM second antenna second strip.

JP 2013-131889 A discloses a vehicular glass antenna, comprising at least: a first feeding point and a second feeding point arranged close to each other; a first line of a first element, the first line vertically extending from the first feeding point; a second line of the first element, the tip end or middle part of the second line being connected to the tip end of the first line of the first element; and a loop line of a second element, the loop line extending from the second feeding point, the tip end of the loop line being disconnected. The second line of the first element is arranged close to one part of the loop line of the second element, the second line and one part of the loop line being capacitively coupled.

### SUMMARY OF THE INVENTION

### [Technical Problem]

Recently, for a glass antenna of a dipole type provided with two feeding portions, an antenna gain has been required to be enhanced.

Thus, in the disclosure of the present application, a glass antenna of a dipole type in which an antenna gain is enhanced and a vehicle window glass provided with at least one such glass antenna will be provided.

### [Solution to Problem]

According to an aspect of the present application, there is provided a glass antenna arranged on a glass plate for a vehicle window as defined in claim 1. Preferred embodiments are set forth in the dependent claims.

### [Effect of Invention]

According to an aspect of the present invention, a glass antenna of a dipole type in which an antenna gain is enhanced and a vehicle window glass provided with at least one such glass antenna can be provided.

### BRIEF DESCRIPTION OF THE DRAWINGS

Other objects and further features of embodiments will become apparent from the following detailed description when read in conjunction with the accompanying drawings, in which:
FIG. 1 is a plan view depicting an example of a configuration of a vehicle window glass according to an embodiment shown from a viewpoint inside the vehicle;
FIG. 2 is a diagram depicting an example of a change in an antenna gain of a glass antenna depending on a length of a first antenna conductor;
FIG. 3 is a diagram depicting an example of a change in an antenna gain of a glass antenna depending on a length of a second antenna conductor;
FIG. 4 is a diagram depicting an example of a change in an antenna gain of a glass antenna depending on a presence or an absence of a third antenna conductor; and
FIG. 5 is a diagram depicting an example of a change in an antenna gain of a glass antenna depending on a presence or an absence of a fourth antenna conductor.

### DETAILED DESCRIPTION OF THE PREFERRED EMBODIMENTS

In the following, with reference to drawings, embodiments for implementing the present invention will be described. Note that in each embodiment, a direction, such as parallel, orthogonal, horizontal, vertical, up-down, right-left, or the like, allows a deviation enough to keep the effect of the present invention. Moreover, a shape of a corner portion of an antenna element is not limited to a right angle, but may be curved. Moreover, the plan view is a diagram when a glass surface of a glass plate for a vehicle window (in the following, also referred to as a "window glass") is viewed facing the glass surface, with the window glass installed in the vehicle being viewed from a viewpoint inside the vehicle (vehicle interior view). Moreover, when the window glass is a front windshield installed in a front part of the vehicle or a rear windshield installed in a rear part of the vehicle, a vertical direction in the plan view corresponds to a vertical direction of the vehicle, and a right-left direction in the drawing is equivalent to a vehicle width direction. The window glass is not limited to the front windshield or the rear windshield, but may be a side glass installed in a side part of the vehicle, for example.

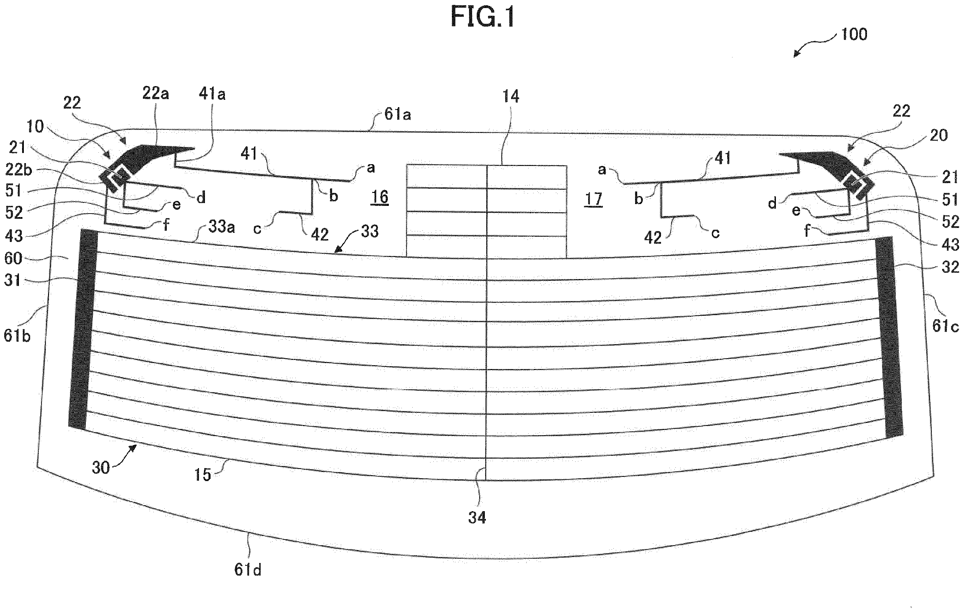

FIG. 1 is a plan view depicting an example of a configuration of the vehicle window glass according to the embodiment shown from a viewpoint inside the vehicle. The vehicle window glass 100, illustrated in FIG. 1, is an example of a rear windshield installed in a rear part of the vehicle. The vehicle window glass 100 includes a glass plate 60 for a vehicle window, a defogger 30 arranged on the glass plate 60, a left rear antenna 10 arranged in a left area on the glass plate 60 and a right rear antenna 20 arranged in a right area on the glass plate 60.

The glass plate 60 is an example of a glass plate for a vehicle window. An outer shape of the glass plate 60 is approximately a rectangle. An upper edge 61a indicates a glass edge on an upper side of the glass plate 60. A lower edge 61d indicates a glass edge on a lower side of the glass plate 60 (opposite the upper edge 61a side). A left edge 61b indicates a glass edge on a left side of the glass plate 60, and a right edge 61c indicates a glass edge on a right side of the glass plate 60 (opposite the left edge 61b side). The left edge 61b is a glass edge being adjacent to left ends of the upper edge 61a and the lower edge 61d, and the right edge 61c is a glass edge being adjacent to right ends of the upper edge 61a and the lower edge 61d.

The glass plate 60 includes a pair of side edges. The left edge 61b is an example of a first side edge that is one of the pair of side edges, and the right edge 61c is an example of a second side edge that is the other of the pair of side edges. At a connection portion of the upper edge 61a and the left edge 61b, the upper edge 61a and the left edge 61b are connected to each other with a curvature, but may be connected without a curvature. The same applies to shapes of the other connection portions of edges.

The defogger 30 is an electric heating conductor pattern that removes fogging on the window plate 60. The defogger 30 includes a plurality of heater wires extending in the right-left direction in the glass plate 60, and a plurality of bus bars for feeding to the plurality of heater wires. In the embodiment, a plurality of heater wires 33 that extend in the right-left direction in the glass plate 60 so as to extend parallel to each other, and a pair of bus bars 31 and 32 connected to the plurality of heater wires 33 are arranged on the glass plate 60. When an electric voltage is applied between the pair of bus bars 31 and 32, the plurality of heater wires 33 conduct electric current and produce heat, and thereby fogging on the glass plate 60 is removed.

The plurality of heater wires 33 are conductor patterns connected to the left bus bar 31 and the right bus bar 32 and arranged between the left bus bar 31 and the right bus bar 32. In the embodiment, middle portions of the plurality of heating wires 33 are short-circuited by a short circuit line 34 extending in a vertical direction of the glass plate 60. The short circuit line 34 that short-circuits the middle portions of the heater wires, may be appropriately added as necessary, or may be absent.

The left bus bar 31 is an example of a first bus bar, and is a conductor pattern that extends in the vertical direction of the glass plate 60 along the left edge 61b. The right bus bar 32 is an example of a second bus bar, and is a conductor pattern that extends in the vertical direction of the glass plate 60 along the right edge 61c.

The defogger 30 includes a first antifogging area 15 and a second antifogging area 14 that protrudes from a central portion of the first antifogging area 15 toward the upper edge 61a side of the glass plate 60.

The antifogging area 15 is indicated by an area that is surrounded by the left bus bar 31, the right bus bar 32, a line segment connecting an upper end of the left bus bar 31 and an upper end of the right bus bar 32 in the right-left direction of the glass plate 60, and a line segment connecting a lower end of the left bus bar 31 and a lower end of the right bus bar 32 in the right-left direction of the glass plate 60. In the illustrated mode, the antifogging area 15 is formed with eleven heater wires, and an upper edge of the antifogging area 15 is a heater wire 33a that is the uppermost heater wire of the eleven heater wires.

The antifogging area 14 is indicated by an area that protrudes from the central area of the heater wire 33a toward the upper edge 61a side, and is connected enabling conduction with the heater wire 33a of the antifogging area 15. In the illustrated mode, the antifogging area 15 is formed of four heater wires, in which adjacent ends are connected to each other.

The left rear antenna 10 is arranged in an upper left area 16 formed above the antifogging area 15 and on the left of the antifogging area 14. The right rear antenna 20 is arranged in an upper right area 17 formed above the antifogging area 15 and on the right of the antifogging area 14.

A diversity antenna can be configured of the left rear antenna 10 and the right rear antenna 20. Note that in the case where a desired antenna gain can be obtained, one of the left rear antenna 10 and the right rear antenna 20 only may be arranged on the glass plate 60.

The left rear antenna 10 is an example of a first antenna, and arranged in the upper left area 16 of the glass plate 60. The left rear antenna 10 is an example of a glass antenna having a pair of feeding portions and a plurality of antenna conductors, and is a conductor pattern arranged planarly on the glass plate 60.

A shape of the left rear antenna 10 is suitable for sending/receiving electromagnetic waves of the UHF (Ultra High Frequency) band with a frequency that falls within a range from 300 MHz to 3 GHz. The electromagnetic waves of the UHF band includes the terrestrial digital television broadcast waves with a frequency that falls within a range from 470 MHz to 720 MHz or the like. The left rear antenna 10 resonates within a frequency band of the UHF band.

The left rear antenna 10 is provided with a first feeding portion and a second feeding portion arranged in the upper left area 16 of the glass plate 60 as a conductor pattern of a pair of feeding portions. A feeding portion 21 is an example of the first feeding portion, and a feeding portion 22 is an example of the second feeding portion. The feeding portion 21 and the feeding portion 22 may be aligned with in-between spacing in any direction. The feeding portion 22 is arranged on the glass plate 60 separated from the feeding portion 21.

In the embodiment, the feeding portion 21 and the feeding portion 22 are aligned with in-between spacing in the right-left /horizontal direction (vehicle width direction) and in the vertical direction of the glass plate 60. The feeding portion 22 is formed so as to surround the feeding portion 21 from above and from left. The feeding portion 22 includes a first feeding area 22a and a second feeding area 22b that is connected to a lower side of the first feeding area 22a. In the embodiment, the first feeding area 22a is located in the upper right direction from the feeding portion 21, the second feeding area 22b is located in the lower left direction from the feeding portion 21, and the first feeding area 22a and the second feeding area 22b are connected to each other at a site located in the upper left direction from the feeding portion 21.

The feeding portion 21 is electrically connected to a signal line of a circuit for communication (not shown), such as a tuner, via a prescribed first conductive member. The feeding portion 22 is electrically connected to an external grounding member (e.g. a grounding member of the circuit for communication or a vehicle body) via a prescribed second conductive member. That is, the left rear antenna 10 is a dipole type antenna provided with the feeding portion 21 and the feeding portion 22 as a pair of feeding points.

The left rear antenna 10 includes first to fifth antenna conductors as a conductor pattern of a plurality of antenna conductors.

A first antenna conductor according to the embodiment is a conductor pattern from a connection point to the feeding portion 21 to a tip portion "d", and is a linear conductor, an end of which is connected to the right side of the feeding portion 21. In the embodiment illustrated in the drawing, the first antenna conductor has a first element 51 that extends in the right-left direction of the glass plate 60.

An end of the first element 51 is connected to the right side of the feeding portion 21. The first element extends linearly to the right from the feeding portion 21 as a point of origin (in a direction away from the feeding portion 21), and extends to the tip portion "d" that is a termination point of the extension to the right. That is, the first element 51 extends towards further distance from the feeding portion 21. The first antenna conductor may include, in addition to the first element 51, at least one element that extends in the same direction as the extension direction of the first element 51 or in a different direction from the extension direction of the first element 51.

A length of the first antenna conductor is preferably (1/4)×λ×α×0.7 or more and (1/4)×λ×α×1.7 or less, where λ is a wavelength of an electromagnetic wave at a central frequency of a frequency band received by the left rear antenna 10 and α is a wavelength shortening rate of a glass, in view of enhancing an antenna gain in an entire frequency band. The length of the first antenna conductor represents an antenna length from the connection point to the feeding portion 21 to the tip portion "d".

For example, in the case where the frequency band received by the left rear antenna 10 is the frequency band of a terrestrial digital television broadcast wave, i.e. a range from 470 MHz to 710 MHz, the central frequency of the frequency band is 590 MHz. In this case, the wavelength shortening rate α is assumed to 0.64.

A second antenna conductor according to the embodiment is a conductor pattern from a connection point to the first feeding area 22a of the feeding portion 22 to a tip portion "a", and is a linear conductor, an end of which is connected to a right side of the first feeding area 22a. In the embodiment illustrated in the drawing, the second antenna conductor has a second element 41 that extends in the right-left direction of the glass plate 60. The second element 41 is located above the first antenna conductor and located on a side where the first element 51 extends with respect to the feeding portion 21.

The second element 41 is located above the first element 51. Moreover, an end of the second element 41 is connected to the right side of the first feeding area 22a via a connection element 41a. The connection element 41a that is a part of the second antenna conductor extends in the vertical direction of the glass plate 60. The second element 41 extends linearly to the right from a lower end of the connection element 41a as a point of origin (in a direction away from the feeding portion 22), and extends to the tip portion "a" that is a termination point of the extension to the right. That is, the second element 41 extends towards further distance from the feeding portion 22. The second antenna conductor may include, in addition to the second element 41, at least one element that extends in the same direction as the extension direction of the second element 41 or in a different direction from the extension direction of the second element 41. For example, the second antenna conductor, illustrated in the drawing, has the connection element 41a, in addition to the second element 41.

In the embodiment, the first element 51 and the second element 41 extend in parallel with each other. However, the present invention is not limited to this; the first element 51 and the second element 41 may extend in a non-parallel manner with each other.

A length of the second antenna conductor is preferably (3/4)×λ×α×0.9 or more and (1/4)×λ×α×1.3 or less, where λ is a wavelength of an electromagnetic wave at a central frequency of a frequency band received by the left rear antenna 10 and α is a wavelength shortening rate of a glass, in view of enhancing an antenna gain especially in a low frequency range. The length of the second antenna conductor represents an antenna length from connection point to the first feeding area 22a of the feeding portion 22 to the tip portion "a".

A third antenna conductor according to the embodiment is a conductor pattern from a branch point "b" on the second element 41 to a tip portion "c", and is a linear conductor, an end of which is connected to the second antenna conductor. In the embodiment illustrated in the drawing, the third antenna conductor includes a third element 42 which is joined at the branch point "b" and is turned toward the first antenna conductor. The third element 42 is located below the second element 41, and located on a side opposite the feeding portion 21 with respect to the first antenna conductor.

An end of the third element 42 is connected to the branch point "b" on the second element 41 that is located in front of the tip portion "a" relative to the feeding portion 22. The third element 42 is formed in an L shape with a partial element extending in the vertical direction and a partial element extending in the right-left direction. The third element 42 linearly extends downward from the branch point "b" as a point of origin (in a direction away from the second element 41), and turns to the left at a termination point of the downward extension (in a direction approaching the first element 51). Then, the third element 42 linearly extends to the tip portion "c" that is a termination point of the extension to the left.

The third antenna conductor may include, in addition to the third element 42, between the branch point "b" and the tip portion "c", at least one element that extends in the same direction as either of the extension directions of the partial elements of the third element 42 or in a different direction from the extension directions.

The partial element of the third element 42 that extends in the right-left direction extends in parallel with the first element 51 and the second element 41. However, the present invention is not limited to this. The partial element may extend in a non-parallel manner with the first element 51 and the second element 41.

A length of the third antenna conductor is preferably (1/4)×λ×α×0.7 or more and (1/4)×λ×α×1.7 or less, where λ is a wavelength of an electromagnetic wave at a central frequency of a frequency band received by the left rear antenna 10 and α is a wavelength shortening rate of a glass, in view of enhancing an antenna gain especially in a low frequency range. The length of the third antenna conductor represents an antenna length from the branch point "b" to the tip portion "c".

A fourth antenna conductor according to the embodiment is a conductor pattern from a connection point to the second feeding area 22b of the feeding portion 22 to a tip portion "f", and is a linear conductor, an end of which is connected to a lower side of the second feeding area 22b. In the embodiment illustrated in the drawing, the fourth antenna conductor has a fourth element 43 formed so as to interpose the feeding portion 21 and the first antenna conductor between the second antenna conductor and the fourth element 43. The fourth element 43 is located below the second feeding area 22b of the feeding portion 22 and the first antenna conductor.

An end of the fourth element 43 is connected to the lower side of the second feeding area 22b. The fourth element 43 is formed in an L shape with a partial element extending in the vertical direction and a partial element extending in the right-left direction. The fourth element 43 linearly extends downward from the second feeding area 22b as a point of origin (in a direction away from the feeding portion 22), and turns to the right at a termination point of the downward extension (in a direction of the first element 51 extending from the feeding portion 21 as a point of origin). Then, the fourth element 43 linearly extends to the tip portion "f" that is a termination point of the extension to the right.

The fourth antenna conductor may include, in addition to the fourth element 43, between the connection point to the second feeding area 22b and the tip portion "f", at least one element that extends in the same direction as either of the extension directions of the partial elements of the fourth element 43 or in a different direction from the extension directions.

The partial element of the fourth element 43 that extends in the right-left direction extends in parallel with the first element 51, the second element 41, and the partial element of the third element 42 extending in the right-left direction. However, the present invention is not limited to this. The partial element may extend in a non-parallel manner with the first element 51, the second element 41 and the partial element of the third element 42.

A length of the fourth antenna conductor is preferably (1/4)×λ×α or more and (1/2)×λ×α or less, where λ is a wavelength of an electromagnetic wave at a central frequency of a frequency band received by the left rear antenna 10 and α is a wavelength shortening rate of a glass, in view of enhancing an antenna gain especially in a low frequency range. The length of the fourth antenna conductor represents an antenna length from the second feeding area 22b to the tip portion "f".

A fifth antenna conductor according to the embodiment is a conductor pattern from a connection point to the feeding portion 21 to a tip portion "e", and is a linear conductor, an end of which is connected to a lower side of the feeding portion 21. The end of the fifth antenna conductor may be connected to a lower side of the first element 51. In the embodiment illustrated in the drawing, the fifth antenna conductor has a fifth element 52 formed so as to interpose the first antenna conductor between the second antenna conductor and the fifth antenna conductor. The fifth element 52 is located below the feeding portion 21 and the first element 51. Moreover, in the embodiment illustrated in the drawing, the first antenna conductor and the fifth antenna conductor are located between the fourth antenna conductor and the second antenna conductor. Moreover, in the embodiment illustrated in the drawing, the number of fifth antenna conductors is one. However, a plurality of fifth antenna conductors may be present.

An end of the fifth element 52 is connected to the lower side of the feeding portion 21. The fifth element 52 is formed in an L shape with a partial element extending in the vertical direction and a partial element extending in the right-left direction. The fifth element 52 linearly extends downward from the feeding portion 21 as a point of origin (in a direction away from the feeding portion 21), and turns to the right at a termination point of the downward extension (in a direction of the first element 51 extending from the feeding portion 21 as a point of origin). Then, the fifth element 52 linearly extends to the tip portion "e" that is a termination point of the extension to the right.

The fifth antenna conductor may include, in addition to the fifth element 52, between the connection point to the feeding portion 21 and the tip portion "e", at least one element that extends in the same direction as either of the extension directions of the partial elements of the fifth element 52 or in a different direction from the extension directions.

The partial element of the fifth element 52 that extends in the right-left direction extends in parallel with the first element 51, the second element 41, and the partial elements of the third element 42 and of the fourth element 43 extending in the right-left direction. However, the present invention is not limited to this. The partial element may extend in a non-parallel manner with the first element 51, the second element 41 and the partial elements of the third element 42 and of the fourth element 43.

A length of the fifth antenna conductor is preferably (1/4)×λ×α×0.7 or more and (1/4)×λ×α×1.7 or less, where λ is a wavelength of an electromagnetic wave at a central frequency of a frequency band received by the left rear antenna 10 and α is a wavelength shortening rate of a glass, in view of enhancing an antenna gain. The length of the fifth antenna conductor represents an antenna length from the connection point to the feeding portion 21 to the tip portion "e". Especially, when a plurality of fifth antenna conductors are directly connected to the feeding portion 21 or indirectly connected to the feeding portion 21 via the first antenna conductor, the antenna gain can be enhanced and the bandwidth can be broadened.

On the other side, the right rear antenna 20 is an example of a second antenna, and arranged in the upper right area 17 of the glass plate 60. As illustrated in the drawing, the left rear antenna 10 and the right rear antenna 20 have the same shape (including approximately the same), and are formed symmetrically (including approximately symmetrically) with respect to a symmetry axis extending in the vertical direction of the glass plate 60. Thus, the aforementioned detailed explanation for the left rear antenna 10 will be applied by reference as a detailed explanation for the right rear antenna 20, and thereby a detailed explanation for the right rear antenna 20 will be omitted.

The feeding portion 21 is electrically connected to a signal line of a circuit for communication (not shown), such as a tuner, via a prescribed first conductive member. The feeding portion 22 is electrically connected to an external grounding member (e.g. a grounding member of the circuit for communication or a vehicle body) via a prescribed second conductive member.

For the aforementioned conductive members, for example, feeder wires, such as AV lines or coaxial cables, are used. The letter "A" of the AV lines represents low voltage cables for automobiles, and the letter "V" represents vinyl coating. In the case of using coaxial cables, internal conductors of the coaxial cables are electrically connected to the feeding portion 21, and the external conductors of the coaxial cables are electrically connected to the feeding portion 22.

Alternatively, a configuration in which a male connector arranged at an end of a coaxial cable is connected to a female connector installed in the feeding portions 21, 22 may be employed. According to the connectors, it becomes easy to attach the internal conductor of the coaxial cable to one of the feeding portions, and attach the external conductor of the coaxial cable to the other feeding portion. The female connector may incorporate an amplifier for amplifying signals.

The external conductor may be connected to a metallic part of the vehicle body as a ground at a given portion along the coaxial cable. For example, the external conductor at the given portion is connected to the vehicle body as a ground through a bracket that fixes the given portion to the vehicle body by a bolt. The amplifier need not be incorporated in the aforementioned female connector. The amplifier may be inserted into the given portion.

### <Examples>

Next, for a glass antenna attached in practice to a rear windshield of a vehicle (a diversity antenna with a left rear antenna 10 and a right rear antenna 20), antenna gains were measured within a bandwidth of the terrestrial digital television broadcast wave. Results of measurement will be shown.

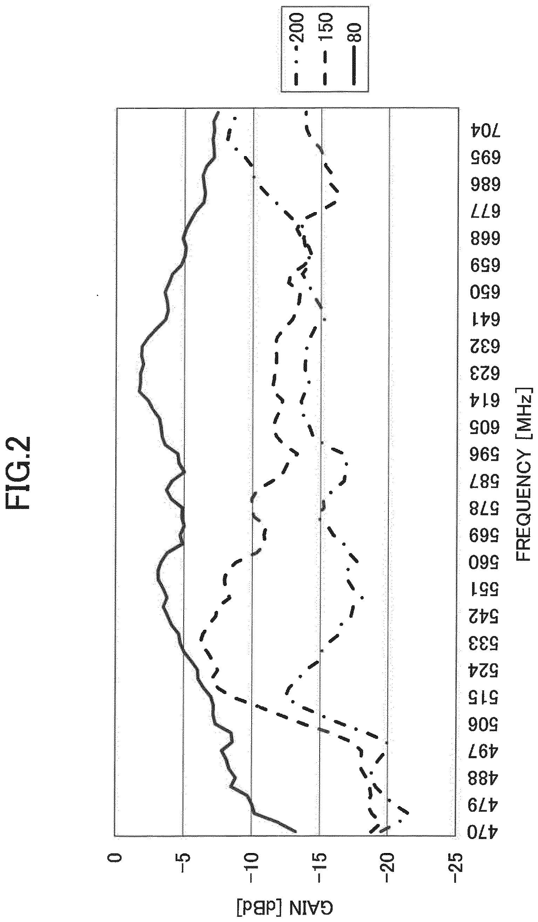

In the examples, FIGS. 2 to 5 show results of measurement for antenna gains of the right rear antenna 20, out of antenna gains of the left rear antenna 10 and antenna gains of the right rear antenna 20. A unit of gain is dBd. Values in the vertical axis indicate average values of antenna gains which were measured for each prescribed angle in a horizontal plane within a half-circumferential range around the rear side of the vehicle.

Moreover, in the examples, unless otherwise specifically noted, dimensions of the respective members of the left rear antenna 10, illustrated in FIG. 1, were as follows (in units of mm) :
length of the first antenna conductor (from the feeding portion 21 to the tip portion "d"): 80;
length of the second antenna conductor (from the first feeding area 22a to the tip portion "a"): 280;
distance from the first feeding area 22a to the branch point "b": 220;
length of the third antenna conductor (from the branch point "b" to the tip portion "c"): 90; and
length of the fifth antenna conductor (from the feeding portion 21 to the tip portion "e"): 85.
Note that in the examples, for the left rear antenna 10, the fourth antenna conductor from the second feeding area 22b to the tip portion "f" was not arranged.

Moreover, in the examples, unless otherwise specifically noted, dimensions of the respective members of the right rear antenna 20, illustrated in FIG. 1, were as follows (in units of mm) :
length of the first antenna conductor (from the feeding portion 21 to the tip portion "d"): 70;
length of the second antenna conductor (from the first feeding area 22a to the tip portion "a"): 250;
distance from the first feeding area 22a to the branch point "b": 220;
length of the third antenna conductor (from the branch point "b" to the tip portion "c": 100;
length of the fourth antenna conductor (from the second feeding area 22b to the tip portion "f"): 120; and
length of the fifth antenna conductor (from the feeding portion 21 to the tip portion "e"): 85.

FIG. 2 is a diagram depicting an example of a change in an antenna gain of the right rear antenna 20 of the diversity antenna depending on the length of the first antenna conductor of the right rear antenna 20. In FIG. 2, a dashed dotted line, a dashed line, and a solid line represent cases where the length of the first antenna conductor of the right rear antenna 20 are 200 mm, 150 mm, and 80 mm, respectively. Within the frequency band of the terrestrial digital television broadcast wave, i.e. from 470 MHz to 710 MHz, the length of 80 mm is greater than or equal to (1/4)×λ×α×0.7 and less than or equal to (1/4)×λ×α×1.7. In the case where the length of the first antenna conductor is 80 mm, the antenna gain is greater than those of the other cases over entirety of frequencies.

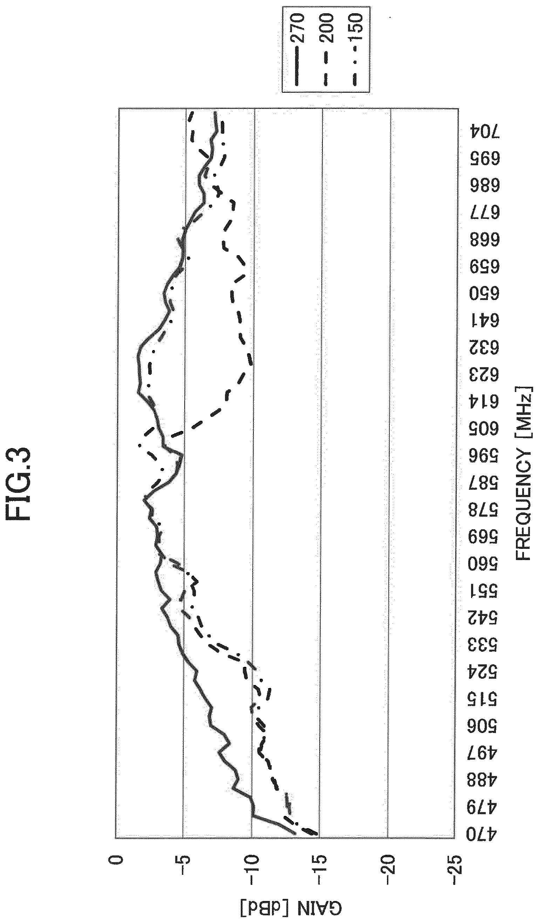

FIG. 3 is a diagram depicting an example of a change in an antenna gain of the right rear antenna 20 of the diversity antenna depending on the length of the second antenna conductor of the right rear antenna 20. In FIG. 3, a solid line, a dashed line, and a dashed dotted line represent cases where the length of the second antenna conductor of the right rear antenna 20 are 270 mm, 200 mm, and 150 mm, respectively. Within the frequency band of the terrestrial digital television broadcast wave, i.e. from 470 MHz to 710 MHz, the length of 270 mm is greater than or equal to (3/4)×λ×α×0.9 and less than or equal to (3/4)×λ×α×1.3. In the case where the length of the second antenna conductor is 270 mm, the antenna gain in the lower frequency range is greater than those of the other cases.

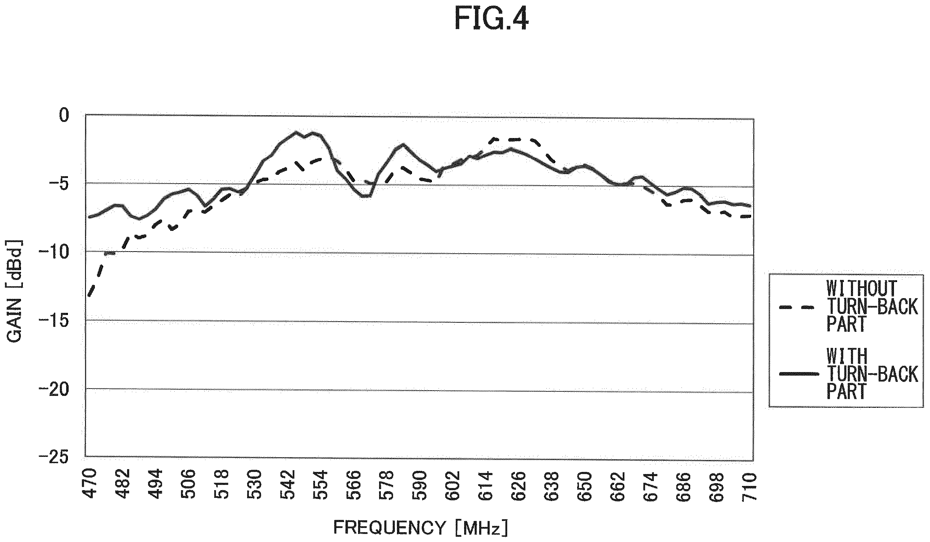

FIG. 4 is a diagram depicting an example of a change in an antenna gain of the right rear antenna 20 of the diversity antenna depending on whether the third antenna conductor of the right rear antenna 20 is present. In FIG. 4, a dashed line indicates an antenna gain in the case where the third antenna conductor is absent ("without turn-back part") and a solid line indicates an antenna gain in the case where the third antenna conductor is present ("with turn-back part"). In the case where the third antenna conductor is present, the antenna gain in the low frequency range is greater than the antenna gain in the case where the third antenna conductor is absent.

FIG. 4 is a diagram depicting an example of a change in an antenna gain of the right rear antenna 20 of the diversity antenna depending on whether the third antenna conductor of the right rear antenna 20 is present. In FIG. 4, a dashed line indicates an antenna gain in the case where the third antenna conductor is absent ("without turn-back part"), and a solid line indicates an antenna gain in the case where the third antenna conductor is present ("with turn-back part"). In the case where the third antenna conductor is present, the antenna gain in the low frequency range is greater than the antenna gain in the case where the third antenna conductor is absent.

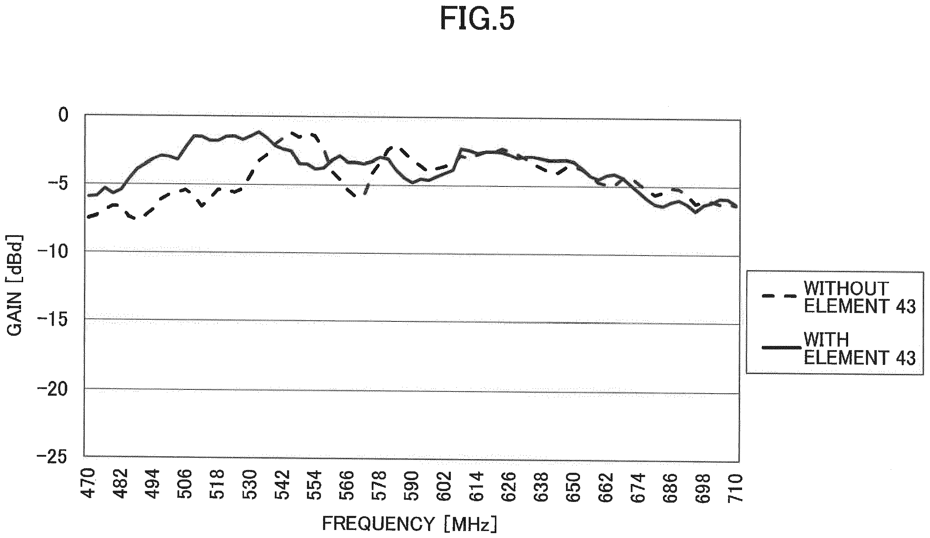

FIG. 5 is a diagram depicting an example of a change in an antenna gain of the right rear antenna 20 of the diversity antenna depending on whether the fourth antenna conductor of the right rear antenna 20 is present. In FIG. 5, a dashed line indicates an antenna gain in the case where the fourth antenna conductor is absent ("without element 43"), and a solid line indicates an antenna gain in the case where the fourth antenna conductor is present ("with element 43"). In the case where the fourth antenna conductor is present, the antenna gain in the low frequency range is greater than the antenna gain in the case where the fourth antenna conductor is absent.

In this way, in the examples, it is found that even if an area in which a glass antenna is arranged is relatively small, a sufficient antenna gain for the glass antenna can be secured. Moreover, it is also found that when a third antenna conductor or a fourth antenna conductor is arranged, an antenna gain especially in a low frequency range of the frequency band of the terrestrial digital television broadcast wave can be enhanced.

As described above, the preferred embodiments and the like of the glass antenna and the window glass for vehicle have been described.

For example, an "end portion" of an element may be a starting point or an end point of an extension of the element, or may be a starting point vicinity or an end point vicinity that is a conductor part in front of the starting point or the end point of the element. Moreover, in a connection portion, elements may be connected to each other, with a curvature.

Moreover, the bus bar, the antenna element, and the feeding portion are formed by printing a paste containing an electrically conductive metal (e.g. a silver paste) on a vehicle inner surface of a window glass and baking the paste. However, the formation method of the bus bar, the antenna element, and the feeding portion is not limited to this. For example, the bus bar, the antenna element, or the feeding portion may be formed by arranging a linear body or a foil type body containing a conductive material such as cupper on a vehicle inner surface or a vehicle outer surface of the window glass. Alternatively, the bus bar, the antenna element or the feeding portion may be stuck on the window glass via an adhesive agent, or may be arranged inside the window glass.

A shape of the feeding portion may be determined according to a shape of a mounting surface of the aforementioned conductive member or the connector. A rectangular shape such as a square, an approximate square, a rectangle, or an approximate rectangle, or a polygonal shape is preferable in mounting. Note that a circular shape, such as a circle, an approximate circle, an ellipse, or an approximate ellipse may be employed.

Moreover, a configuration in which a conductive layer forming at least any one of the bus bar, the antenna element and the feeding portion is arranged inside or on a surface of a synthetic resin film, and the synthetic resin film with the conductive layer is arranged on the vehicle inner surface or the vehicle outer surface of the window glass may be employed. Furthermore, a configuration in which a flexible circuit substrate, on which an antenna element is formed, is arranged on the vehicle inner surface or the vehicle outer surface of the window glass may be employed.

Moreover, a part of or a whole of the bus bar, the feeding portion and the antenna element may be arranged on a concealing film formed on a glass surface on a peripheral edge of the window glass. The concealing film specifically includes a ceramic such as a black ceramic film. In this case, when viewed from the vehicle outside of the window glass, a part arranged on the concealing film is not viewed, and thereby the window glass is excellent in design.

The second element 41 and the third element 42 are preferably configured so as not to surround the first element 51. That is, a length of a partial element of the third element 42 extending in the right-left direction is preferably determined so as not to overlap with the first element 51 in the vertical direction. In this case, even if the length of the partial element is small, the antenna gain is enhanced. Furthermore, because excess partial elements are not arranged, a visibility for a driver is also enhanced.

The present application is based on the priority of Japanese Priority Application No. 2017-124820 filed on June 27, 2017.

### REFERENCE SIGNS LIST

- 10: left rear antenna
- 20: right rear antenna
- 21: first feeding portion
- 22: second feeding portion
- 22a: first feeding area
- 22b: second feeding area
- 30: defogger
- 31: left bus bar
- 32: right bus bar
- 34: short circuit line
- 41: second element
- 42: third element
- 43: fourth element
- 51: first element
- 52: fifth element
- 60: glass plate
- 100: vehicle window glass

## Claims

1. A glass antenna (10, 20) arranged on a glass plate for a vehicle window comprising:
a first feeding portion (21);
a second feeding portion (22) arranged apart from the first feeding portion (21), and electrically connected to an external grounding member;
a first antenna conductor, an end of which is connected to the first feeding portion (21);
a second antenna conductor, an end of which is connected to the second feeding portion (22); and
a third antenna conductor, an end of which is connected to the second antenna conductor, and a fourth antenna conductor, an end of which is connected to the second feeding portion (22),
wherein the first antenna conductor includes a first element (51) extending in a horizontal direction of the glass plate,
wherein the second antenna conductor includes a second element (41) being located above the first antenna conductor, being located on a side where the first element (51) extends with respect to the first feeding portion (21), and extending in the horizontal direction of the glass plate,
wherein the third antenna conductor includes a third element (42) being located below the second element (41), and being located on a side opposite the first feeding portion (21) with respect to the first antenna conductor,
wherein the third element (42) has a first end portion which is connected to a branch point (b) of the second element (41), and a second end portion (c) which is a tip portion, and an L-shape is formed by a partial element extending in a vertical direction toward the branch point (b) on the second element (41), and a partial element extending in the horizontal direction, which is turned toward the first antenna conductor, including the tip portion (c), the second element (41) including a third end portion (a) which is a tip portion, the branch point (b) being located at a position closer to the second feeding portion (22) than is the third end portion (a),
wherein the fourth antenna conductor forms an L-shape by a partial element extending in the vertical direction from the second feeding portion (22) and a partial element extending in the horizontal direction to a tip portion (f), and includes a fourth element (43) formed so as to interpose the first feeding portion (22) and the first antenna conductor between the second antenna conductor and the fourth element (43), and
the second element (41) and the third element (42) do not surround the first element (51).

2. The glass antenna (10, 20) according to claim 1, further comprising:
at least one fifth antenna conductor, an end of which is connected to the first feeding portion (21) or the first antenna conductor,
wherein the fifth antenna conductor includes a fifth element (52) formed so as to interpose the first antenna conductor between the second antenna conductor and the fifth element (52).

3. The glass antenna (10, 20) according to claim 2,
wherein a length of the fifth antenna conductor is (1/4) * λ * α * 0.7 or more and (1/4) * λ * α * 1.7 or less, where λ is a wavelength of a received electromagnetic wave at a central frequency of a frequency band and α is a wavelength shortening rate of the glass.

4. The glass antenna (10, 20) according to any one of claims 1 to 3,
wherein the partial element of the third element (42) extending in the horizontal direction does not overlap with the first element (51) in the vertical direction.

5. The glass antenna (10, 20) according to any one of claims 1 to 4,
wherein the first feeding portion (21) and the second feeding portion (22) are aligned with in-between spacing in the horizontal direction and in the vertical direction of the glass plate.

6. The glass antenna (10, 20) according to claim 5,
wherein the second feeding portion (22) is formed so as to surround the first feeding portion (21) from above and from left.

7. The glass antenna (10, 20) according to any one of claims 1 to 6,
wherein a length of the first antenna conductor is (1/4) * λ * α * 0.7 or more and (1/4) * λ * α * 1.7 or less, where λ is a wavelength of a received electromagnetic wave at a central frequency of a frequency band and α is a wavelength shortening rate of the glass.

8. The glass antenna (10, 20) according to any one of claims 1 to 7,
wherein the second antenna conductor has its second element (41) connected to the second feeding portion (22) via a connection element (41a), the connection element being connected to the second feeding portion (22) and extending in the vertical direction.

9. The glass antenna (10, 20) according to any one of claims 1 to 8,
wherein a length of the second antenna conductor is (3/4) * λ * α * 0.9 or more and (3/4) * λ * α * 1.3 or less, where λ is a wavelength of a received electromagnetic wave at a central frequency of a frequency band and α is a wavelength shortening rate of the glass.

10. The glass antenna (10, 20) according to any one of claims 1 to 9,
wherein a length of the third antenna conductor is (1/4) * λ * α * 0.7 or more and (1/4) * λ * α * 1.7 or less, where λ is a wavelength of a received electromagnetic wave at a central frequency of a frequency band and α is a wavelength shortening rate of the glass.

11. The glass antenna (10, 20) according to any one of claims 1 to 10,
wherein the first feeding portion (21) is configured to be electrically connected to a signal line of a circuit for communication, and
the second feeding portion (22) is configured to be electrically connected to an external grounding member.

12. The glass antenna (10, 20) according to any one of claims 1 to 11, wherein the antenna (10, 20) is arranged in an upper left area (16) or in an upper right area (16) of the glass plate (60), and
the second feeding portion (22) being closer to an upper edge (61a) than the first feeding portion (21), the upper edge (61a) indicating a glass edge on the upper side of the glass plate (60).

13. A vehicle window glass (100) comprising:
at least one glass antenna (10, 20) according to any one of claims 1 to 12.

14. The vehicle window glass (100) according to claim 13,
wherein the glass plate (60) includes a defogger (30) having a first antifogging area (15); and a second antifogging area (14) protruding from a central portion of the first antifogging area (15) toward an upper edge of the glass plate (60), and
wherein the glass antenna (10, 20) is arranged in at least one of an area at left of the second antifogging portion (14) and an area at right of the second antifogging portion (14).

## Patentansprüche

1. Glasantenne (10, 20), die auf einer Glasplatte für ein Fahrzeugfenster angeordnet ist, aufweisend:
einen ersten Zufuhrabschnitt (21);
einen zweiten Zufuhrabschnitt (22), der von dem ersten Zufuhrabschnitt (21) entfernt angeordnet ist und elektrisch mit einem externen Erdungselement verbunden ist;
einen ersten Antennenleiter, wobei ein Ende von diesem mit dem ersten Zufuhrabschnitt (21) verbunden ist;
einen zweiten Antennenleiter, wobei ein Ende von diesem mit dem zweiten Zufuhrabschnitt (22) verbunden ist; und
einen dritten Antennenleiter, wobei ein Ende von diesem mit dem zweiten Antennenleiter verbunden ist, und einen vierten Antennenleiter, wobei ein Ende von diesem mit dem zweiten Zufuhrabschnitt (22) verbunden ist,
wobei der erste Antennenleiter ein erstes Element (51) beinhaltet, das sich in einer horizontalen Richtung der Glasplatte erstreckt,
wobei der zweite Antennenleiter ein zweites Element (41) beinhaltet, das sich oberhalb des ersten Antennenleiters befindet, das sich auf einer Seite befindet, wo sich das erste Element (51) in Bezug auf den ersten Zufuhrabschnitt (21) erstreckt, und sich in der horizontalen Richtung der Glasplatte erstreckt,
wobei der dritte Antennenleiter ein drittes Element (42) beinhaltet, das sich unterhalb des zweiten Elements (41) befindet und sich auf einer Seite gegenüber des ersten Zufuhrabschnitts (21) in Bezug auf den ersten Antennenleiter befindet,
wobei das dritte Element (42) einen ersten Endabschnitt, der mit einem Verzweigungspunkt (b) des zweiten Elements (41) verbunden ist, und einen zweiten Endabschnitt (c), welcher ein Spitzenabschnitt ist, aufweist, und eine L-Form durch ein Teilelement, das sich in einer vertikalen Richtung zu dem Verzweigungspunkt (b) auf dem zweiten Element (41) hin erstreckt, und ein Teilelement, das sich in der horizontalen Richtung erstreckt, welches zu dem ersten Antennenleiter gedreht ist, gebildet ist, einschließlich des Spitzenabschnitts (c), wobei das zweite Element (41) einen dritten Endabschnitt (a) beinhaltet, welcher ein Spitzenabschnitt ist, wobei sich der Verzweigungspunkt (b) in einer Position befindet, die näher bei dem zweiten Zufuhrabschnitt (22) liegt als der dritte Endabschnitt (a),
wobei der vierte Antennenleiter eine L-Form durch ein Teilelement, das sich in der vertikalen Richtung von dem zweiten Zufuhrabschnitt (22) erstreckt, und ein Teilelement, das sich in der horizontalen Richtung zu einem Spitzenabschnitt (f) erstreckt, bildet und ein viertes Element (43) beinhaltet, das so gebildet ist, dass es den ersten Zufuhrabschnitt (22) und den ersten Antennenleiter zwischen dem zweiten Antennenleiter und dem vierten Element (43) anordnet, und
das zweite Element (41) und das dritte Element (42) das erste Element (51) nicht umgeben.

2. Glasantenne (10, 20) nach Anspruch 1, ferner umfassend:
mindestens einen fünften Antennenleiter, wobei ein Ende von diesem mit dem ersten Zufuhrabschnitt (21) oder dem ersten Antennenleiter verbunden ist,
wobei der fünfte Antennenleiter ein fünftes Element (52) beinhaltet, das so gebildet ist, dass es den ersten Antennenleiter zwischen dem zweiten Antennenleiter und dem fünften Element (52) anordnet.

3. Glasantenne (10, 20) nach Anspruch 2,
wobei eine Länge des fünften Antennenleiters (1/4) * λ * α * 0,7 oder mehr und (1/4) * λ * α * 1,7 oder weniger ist, wobei λ eine Wellenlänge einer empfangenen elektromagnetischen Welle mit einer Mittenfrequenz eines Frequenzbands ist und α eine Wellenlängenverkürzungsrate des Glases ist.

4. Glasantenne (10, 20) nach einem der Ansprüche 1 bis 3,
wobei sich das Teilelement des dritten Elements (42), das sich in der horizontalen Richtung erstreckt, nicht mit dem ersten Element (51) in der vertikalen Richtung überlappt.

5. Glasantenne (10, 20) nach einem der Ansprüche 1 bis 4,
wobei der erste Zufuhrabschnitt (21) und der zweite Zufuhrabschnitt (22) mit einem Zwischenabstand in der horizontalen Richtung und in der vertikalen Richtung der Glasplatte ausgerichtet sind.

6. Glasantenne (10, 20) nach Anspruch 5,
wobei der zweite Zufuhrabschnitt (22) so gebildet ist, dass er den ersten Zufuhrabschnitt (21) von oben und von links umgibt.

7. Glasantenne (10, 20) nach einem der Ansprüche 1 bis 6,
wobei eine Länge des ersten Antennenleiters (1/4) * λ * α * 0,7 oder mehr und (1/4) * λ * α * 1,7 oder weniger ist, wobei λ eine Wellenlänge einer empfangenen elektromagnetischen Welle mit einer Mittenfrequenz eines Frequenzbands ist und α eine Wellenlängenverkürzungsrate des Glases ist.

8. Glasantenne (10, 20) nach einem der Ansprüche 1 bis 7,
wobei das zweite Element (41) des zweiten Antennenleiters mit dem zweiten Zufuhrabschnitt (22) über ein Verbindungselement (41a) verbunden ist, wobei das Verbindungselement mit dem zweiten Zufuhrabschnitt (22) verbunden ist und sich in der vertikalen Richtung erstreckt.

9. Glasantenne (10, 20) nach einem der Ansprüche 1 bis 8,
wobei eine Länge des zweiten Antennenleiters (3/4) * λ * α * 0,9 oder mehr und (3/4) * λ * α * 1,3 oder weniger beträgt, wobei λ eine Wellenlänge einer empfangenen elektromagnetischen Welle mit einer Mittenfrequenz eines Frequenzbands ist und α eine Wellenlängenverkürzungsrate des Glases ist.

10. Glasantenne (10, 20) nach einem der Ansprüche 1 bis 9,
wobei eine Länge des dritten Antennenleiters (1/4) * λ * α * 0,7 oder mehr und (1/4) * λ * α * 1,7 oder weniger beträgt, wobei λ eine Wellenlänge einer empfangenen elektromagnetischen Welle mit einer Mittenfrequenz eines Frequenzbands ist und α eine Wellenlängenverkürzungsrate des Glases ist.

11. Glasantenne (10, 20) nach einem der Ansprüche 1 bis 10,
wobei der erste Zufuhrabschnitt (21) so konfiguriert ist, dass er elektrisch mit einer Signalleitung einer Schaltung zur Kommunikation verbunden ist, und
der zweite Zufuhrabschnitt (22) so konfiguriert ist, dass er elektrisch mit einem externen Erdungselement verbunden ist.

12. Glasantenne (10, 20) nach einem der Ansprüche 1 bis 11, wobei die Antenne (10, 20) in einem oberen linken Bereich (16) oder in einem oberen rechten Bereich (16) der Glasplatte (60) angeordnet ist, und
sich der zweite Zufuhrabschnitt (22) näher bei einem oberen Rand (61a) befindet als der erste Zufuhrabschnitt (21), wobei der obere Rand (61a) einen Glasrand auf der oberen Seite der Glasplatte (60) angibt.

13. Fahrzeugfensterglas (100) umfassend:
mindestens eine Glasantenne (10, 20) nach einem der Ansprüche 1 bis 12.

14. Fahrzeugfensterglas (100) nach Anspruch 13,
wobei die Glasplatte (60) eine Scheibenheizung (30) beinhaltet, die einen ersten Antibeschlagbereich (15) aufweist; und einen zweiten Antibeschlagbereich (14), der von einem zentralen Abschnitt des ersten Antibeschlagbereichs (15) zu einem oberen Rand der Glasplatte (60) hin vorsteht, und
wobei die Glasantenne (10, 20) in mindestens einem eines Bereichs links von dem zweiten Antibeschlagabschnitt (14) und eines Bereichs rechts von dem zweiten Antibeschlagabschnitt (14) angeordnet ist.

## Revendications

1. Antenne de vitre (10, 20) agencée sur une plaque de verre pour une vitre de véhicule, comprenant :
une première portion d'alimentation (21) ;
une deuxième portion d'alimentation (22) agencée à l'écart de la première portion d'alimentation (21), et reliée électriquement à un membre de mise à la terre externe ;
un premier conducteur d'antenne dont une extrémité est reliée à la première portion d'alimentation (21) ;
un deuxième conducteur d'antenne dont une extrémité est reliée à la deuxième portion d'alimentation (22) ; et
un troisième conducteur d'antenne dont une extrémité est reliée au deuxième conducteur d'antenne, et un quatrième conducteur d'antenne dont une extrémité est reliée à la deuxième portion d'alimentation (22),
le premier conducteur d'antenne incluant un premier élément (51) s'étendant dans une direction horizontale de la plaque de verre,
le deuxième conducteur d'antenne incluant un deuxième élément (41) situé au-dessus du premier conducteur d'antenne, situé sur un côté où le premier élément (51) s'étend par rapport à la première portion d'alimentation (21), et s'étendant dans la direction horizontale de la plaque de verre,
le troisième conducteur d'antenne incluant un troisième élément (42) situé sous le deuxième élément (41), et situé sur un côté opposé à la première portion d'alimentation (21) par rapport au premier conducteur d'antenne,
le troisième élément (42) ayant une première portion d'extrémité qui est reliée à un point de dérivation (b) du deuxième élément (41), et une deuxième portion d'extrémité (c) qui est une portion de pointe, et une forme en L étant formée par un élément partiel s'étendant dans une direction verticale vers le point de dérivation (b) sur le deuxième élément (41), et un élément partiel s'étendant dans la direction horizontale, qui est tourné vers le premier conducteur d'antenne, y compris la portion de pointe (c), le deuxième élément (41) incluant une troisième portion d'extrémité (a) qui est une portion de pointe, le point de dérivation (b) étant situé à une position plus proche de la deuxième portion d'alimentation (22) que ne l'est la troisième portion d'extrémité (a),
le quatrième conducteur d'antenne formant une forme de L par un élément partiel s'étendant dans la direction verticale à partir de la deuxième portion d'alimentation (22) et un élément partiel s'étendant dans la direction horizontale jusqu'à une portion de pointe (f), et incluant un quatrième élément (43) formé de manière à interposer la première portion d'alimentation (22) et le premier conducteur d'antenne entre le deuxième conducteur d'antenne et le quatrième élément (43), et
le deuxième élément (41) et le troisième élément (42) n'entourant pas le premier élément (51).

2. Antenne de vitre (10, 20) selon la revendication 1, comprenant en outre :
au moins un cinquième conducteur d'antenne, dont une extrémité est reliée à la première portion d'alimentation (21) ou au premier conducteur d'antenne,
le cinquième conducteur d'antenne incluant un cinquième élément (52) formé de manière à interposer le premier conducteur d'antenne entre le deuxième conducteur d'antenne et le cinquième élément (52).

3. Antenne de vitre (10, 20) selon la revendication 2,
une longueur du cinquième conducteur d'antenne étant de (1/4) * λ * α * 0,7 ou plus et de (1/4) * λ * α * 1,7 ou moins, λ étant une longueur d'onde d'une onde électromagnétique reçue à une fréquence centrale d'une bande de fréquences et α étant un taux de raccourcissement de la longueur d'onde du verre.

4. Antenne de vitre (10, 20) selon l'une quelconque des revendications 1 à 3,
l'élément partiel du troisième élément (42) s'étendant dans la direction horizontale ne chevauchant pas le premier élément (51) dans la direction verticale.

5. Antenne de vitre (10, 20) selon l'une quelconque des revendications 1 à 4,
la première portion d'alimentation (21) et la deuxième portion d'alimentation (22) étant alignées avec un espacement intermédiaire dans la direction horizontale et dans la direction verticale de la plaque de verre.

6. Antenne de vitre (10, 20) selon la revendication 5,
la deuxième portion d'alimentation (22) étant formée de manière à entourer la première portion d'alimentation (21) depuis le haut et depuis la gauche.

7. Antenne de vitre (10, 20) selon l'une quelconque des revendications 1 à 6,
une longueur du premier conducteur d'antenne étant de (1/4) * λ * α * 0,7 ou plus et de (1/4) * λ * α * 1,7 ou moins, λ étant une longueur d'onde d'une onde électromagnétique reçue à une fréquence centrale d'une bande de fréquences et α étant un taux de raccourcissement de la longueur d'onde du verre.

8. Antenne de vitre (10, 20) selon l'une quelconque des revendications 1 à 7,
le deuxième conducteur d'antenne ayant son deuxième élément (41) relié à la deuxième portion d'alimentation (22) par l'intermédiaire d'un élément de connexion (41a), l'élément de connexion étant relié à la deuxième portion d'alimentation (22) et s'étendant dans la direction verticale.

9. Antenne de vitre (10, 20) selon l'une quelconque des revendications 1 à 8,
une longueur du deuxième conducteur d'antenne étant de (3/4) * λ * α * 0,9 ou plus et de (3/4) * λ * α * 1,3 ou moins, λ étant une longueur d'onde d'une onde électromagnétique reçue à une fréquence centrale d'une bande de fréquences et α étant un taux de raccourcissement de la longueur d'onde du verre.

10. Antenne de vitre (10, 20) selon l'une quelconque des revendications 1 à 9,
une longueur du troisième conducteur d'antenne étant de (1/4) * λ * α * 0,7 ou plus et de (1/4) * λ * α * 1,7 ou moins, λ étant une longueur d'onde d'une onde électromagnétique reçue à une fréquence centrale d'une bande de fréquences et α un taux de raccourcissement de la longueur d'onde du verre.

11. Antenne de vitre (10, 20) selon l'une quelconque des revendications 1 à 10,
la première portion d'alimentation (21) étant configurée pour être reliée électriquement à une ligne de signal d'un circuit de communication, et
la deuxième portion d'alimentation (22) étant configurée pour être reliée électriquement à un membre de mise à la terre externe.

12. Antenne de vitre (10, 20) selon l'une quelconque des revendications 1 à 11, l'antenne (10, 20) étant agencée dans une zone supérieure gauche (16) ou dans une zone supérieure droite (16) de la plaque de verre (60), et
la deuxième portion d'alimentation (22) étant plus proche d'un bord supérieur (61a) que la première portion d'alimentation (21), le bord supérieur (61a) indiquant un bord de verre sur le côté supérieur de la plaque de verre (60).

13. Verre à vitre de véhicule (100), comprenant :
au moins une antenne de vitre (10, 20) selon l'une quelconque des revendications 1 à 12.

14. Verre à vitre de véhicule (100) selon la revendication 13,
la plaque de verre (60) incluant un désembueur (30) ayant une première zone antibuée (15) ; et une deuxième zone antibuée (14) faisant saillie à partir d'une portion centrale de la première zone antibuée (15) vers un bord supérieur de la plaque de verre (60), et
l'antenne de vitre (10, 20) étant agencée dans au moins une parmi une zone à gauche de la deuxième portion antibuée (14) et une zone à droite de la deuxième portion antibuée (14).
